# EUROPÄISCHE PATENTANMELDUNG

(11) **EP 4 075 461 A1**
(43) Veröffentlichungstag der Anmeldung: **19.10.2022**
(21) Anmeldenummer: 22165315.7
(22) Anmeldetag: 30.03.2022
(51) Int. Cl.: H01F 41/02, H01F 3/08, H01F 1/24, H02K 1/02, H02K 15/02, B22F 8/00

(54) **VERFAHREN ZUM HERSTELLEN EINES ELEKTRISCHEN BAUTEILS**

(30) Priorität: 31.03.2021 DE 102021203308
(71) Anmelder: Universität Stuttgart, 70174 Stuttgart (DE)
(72) Erfinder: Weiß, André, 70597 Stuttgart (DE); Liewald, Mathias, 71334 Waiblingen (DE); Felde, Alexander, 71679 Asperg (DE); Weiß, Alexander, 70374 Stuttgart (DE); Deliktas, Tahsin, 70376 Stuttgart (DE); Grötzinger, Karl, 74336 Brackenheim (DE)
(74) Vertreter: Altmann Stößel Dick Patentanwälte PartG mbB

(57) **Zusammenfassung**

Es wird ein Verfahren zum Herstellen eines elektrischen Bauteils (100) vorgeschlagen. Das Verfahren umfasst Bereitstellen von Spänen (108), wobei die Späne (108) aus mindestens einem Material hergestellt sind, das Metall aufweist, elektrisches Isolieren der Späne (108) zueinander, Bereitstellen mindestens eines ersten Umformwerkzeugs (116), wobei das erste Umformwerkzeug (116) mindestens einen ersten Stempel (120) und eine erste Matrize (118) umfasst, Anordnen der elektrisch isolierten Späne (108) in der ersten Matrize (188), und Umformen der elektrisch isolierten Späne (108) mittels des ersten Umformwerkzeugs (116) zu einer vorbestimmten Form (124). Weiterhin wird ein auf diese Weise herstellbares elektrisches Bauteil (100) vorgeschlagen.

## Beschreibung

### Technisches Gebiet

Die vorliegende Erfindung betrifft ein Verfahren zum Herstellen eines Bauteils.

### Technischer Hintergrund

In vielen technischen Bereichen kommen Bauteile mit elektrischen und magnetischen Eigenschaften zum Einsatz. Ein technisches Gebiet für ein Verbundbauteil, auf das die vorliegende Erfindung jedoch grundsätzlich nicht beschränkt ist, ist die Herstellung eines Stators für einen Elektromotor. Der Stator eines Elektromotors besteht konventionell aus einem Metallblechpaket. Bisher werden derartige Blechpakete aus vielen Lagen einzelner Bleche aufgebaut, wobei diese verschweißt, verklebt oder formschlüssig durch das Umformen kleiner Nasen in das jeweils darunterliegende Blech miteinander gefügt werden.

Neben der Ausführung als durchgehend geschlossene Ringe können die Blechpakete auch in segmentierter Form ausgeführt werden. Hierbei wird der Stator in mehrere Segmente aufgeteilt, wie beispielsweise 24 Segmente mit einer Erstreckung in Umfangsrichtung um einen gemeinsamen Mittelpunkt von jeweils 15°. Die einzelnen Bleche dieser Segmente sind im Vergleich zu den durchgehend geschlossenen Ringen vergleichsweise kompakt, womit kleine Stanzautomaten eingesetzt werden können und eine sehr hohe Materialausnutzung aus einem Blechcoil erzielt wird. Eine derartige Segmentierung zielt insbesondere auf kleine und mittlere Stückzahlen ab. Die einzelnen Segmente können im Anschluss auf unterschiedliche Weise gefügt werden, um einen kompletten Stator zu bilden.

Die DE 11 2014 004 454 T5 offenbart einen magnetischen Pulverkern, ein Verfahren zur Herstellung eines Pulverpresslings für einen magnetischen Kern, eine Matrize und Matrizenanordnung zur Herstellung eines magnetischen Pulverkerns, und Matrizen-Gleitzusammensetzung zur Herstellung eines magnetischen Pulverkerns.

Die EP 2 060 344 B1 offenbart einen Magnetpulverkern und ein Pulver auf Eisenbasis für einen Magnetpulverkern.

Die EP 2 477 199 A1 offenbart einen geformten Seltenerdmagnet und ein Verfahren zum Herstellen desselben.

Die GB 2 430 682 A offenbart ein isoliertes Magnetpartikelmaterial.

Die US 2013/ 0 056 674 A1 offenbart einen Pulvermagnetkern und ein Verfahren zum Herstellen desselben.

Die US 2014/ 0 183 402 A1 offenbart ein eisenbasiertes Weichmagnetpulver für eine Massekernverwendung, ein Verfahren zum Herstellen desselben und einen Massekern.

Die DE 11 2014 001 651 T5 offenbart einen Pulvermagnetkern für einen Reaktor.

Trotz der zahlreichen Vorteile der aus dem Stand der Technik bekannten Verfahren zum Herstellen von elektrischen Bauteilen insbesondere für einen Stator eines Elektromotors beinhalten diese noch Verbesserungspotenzial. So stellt die Herstellung von Elektromotoren nach wie vor einen hohen Aufwand dar. Bei der Verarbeitung der Bleche zu Blechpakten fällt verfahrensbedingt Ausschuss an, da die Blechplatinen nicht vollständig ausgenutzt werden können. Trotz der bereits hohen Materialausnutzung der segmentierten Bauart von Statoren im Vergleich zu monolithischen Blechringen kann auch hier keine vollständige Materialausnutzung erreicht werden. Weiterhin sind die einzelnen Bleche zueinander isoliert, die einzelnen Bleche selbst weisen jedoch ein großes, leitfähiges Volumen auf.

### Aufgabe der Erfindung

Es ist daher Aufgabe der vorliegenden Erfindung, ein Verfahren zum Herstellen eines elektrischen Bauteils bereitzustellen, welches die Nachteile bekannter Herstellungsverfahren zumindest weitgehend vermeidet. Insbesondere soll ein neuartiges, ressourcenschonendes und kostengünstiges Fertigungsverfahren im Bereich der Massivumformung zur Herstellung von elektrischen Bauteilen, wie beispielsweise Statoren für Elektromotoren, aber auch anderen elektrischen Komponenten, bei denen ähnliche elektrische und magnetische Eigenschaften gefordert sind, bereitgestellt werden. Zudem soll das Verfahren die Herstellung von Bauteilen für eine gezielte dreidimensionale Flussführung erlauben und die Leistungsfähigkeit der so hergestellten elektrischen Bauteile gezielt bei der Herstellung beeinflussen lassen.

### Allgemeine Beschreibung der Erfindung

Diese Aufgabe wird adressiert durch ein Verfahren zum Herstellen eines elektrischen Bauteils und ein elektrisches Bauteil mit den Merkmalen der unabhängigen Patentansprüche. Vorteilhafte Weiterbildungen, welche einzeln oder in beliebiger Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf, "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

Weiterhin werden im Folgenden die Begriffe "erstes", "zweites", "drittes" und ihre Abwandlungen lediglich verwendet, um Bauteile oder Merkmale begrifflich zu unterscheiden. Diese Begriffe sollen keine bestimmte Reihenfolge oder Gewichtung darstellen.

Ein erfindungsgemäßes Verfahren zum Herstellen eines elektrischen Bauteils mit mindestens einem Vorsprung umfasst die folgenden Schritte, bevorzugt in der angegebenen Reihenfolge:
- Bereitstellen von Spänen, wobei die Späne aus mindestens einem Material hergestellt sind, das Metall aufweist,
- elektrisches Isolieren der Späne zueinander,
- Bereitstellen mindestens eines ersten Umformwerkzeugs, wobei das erste Umformwerkzeug mindestens einen ersten Stempel und eine erste Matrize umfasst,
- Anordnen der elektrisch isolierten Späne in der ersten Matrize, und
- Umformen der elektrisch isolierten Späne mittels des ersten Umformwerkzeugs zu einer vorbestimmten Form.

Das neuartige, erfindungsgemäße Verfahren ermöglicht eine ressourcenschonende Fertigung von elektrischen Bauteilen, wie beispielsweise Statoren, unter Verwendung von Material, welches als Abfallprodukt aus zerkleinernden, wie beispielsweise spanenden, Fertigungsverfahren entsteht. Das Verfahren stellt folglich eine Alternative zu dem gängigen Verfahren des Stanzens von Blechen inklusive nachfolgendem Paketieren zu Blechpaketen zur Herstellung von Statoren für Elektromotoren dar. Die Verwendung noch kleinerer Einzelbestandteile, die zueinander isoliert sind, kann zu einer weiteren Effizienzsteigerung von Elektromotoren beitragen. So bewirkt die elektrische Isolierung der Späne eine deutliche Reduzierung von Wirbelströmen in dem elektrischen Bauteil. Weiter lassen sich durch eine Einstellung einer Größenverteilung der Späne auch gezielt die elektrischen und/oder magnetischen Eigenschaften des Bauteils, wie beispielsweise elektrischer Wirkungsgrad, gezielt beeinflussen. Dabei umfasst das Umformen mittels des ersten Umformwerkzeugs ein Ausbilden einer Endform des elektrischen Bauteils als auch das Ausbilden einer Vorform des elektrischen Bauteils, die in einem nachfolgenden Verfahrensschritt zu einer Endform umgeformt wird, wie nachstehend näher beschrieben wird.

Das neuartige, erfindungsgemäße Verfahren ist auch im Vergleich zu Herstellungsverfahren von elektrischen Bauteilen aus Metallpulver, wie sie beispielsweise aus dem oben genannten Stand der Technik bekannt sind, ressourcenschonender, da für diese herkömmlichen Verfahren in aufwändiger Weise separat ein Pulver durch üblicherweise Verdüsen von Metallschmelze hergestellt werden muss. Dabei wird bei der Herstellung von Pulvern eine möglichst homogene Partikelgrößenverteilung angestrebt. Außerdem erfordert die Herstellung von elektrischen Bauteilen aus Pulver ein Kompaktieren und anschließendes Sintern. Das Sintern erfolgt im Falle von metallischen Werkstoffen bei Temperaturen knapp unterhalb der Schmelztemperatur, um den nötigen Werkstoffzusammenhalt durch eine Art Verbacken zu erzielen. Dahingegen liegt bei dem erfindungsgemäßen Verfahren bedingt durch die Natur von Spänen eine inhomogene Größenverteilung vor, die für ein gutes Ineinandergreifen und Zusammenhalten der umgeformten Späne sorgt. Dadurch kann ein energieintensives Sintern entfallen. Späne haben außerdem bedingt durch ihre ungleichförmige Form eine Vorzugsrichtung für ein Magnetfeld, wohingegen Pulver bedingt durch ihre möglichst runde Form keine eindeutige Orientierung für das Magnetfeld haben, da die Magnetfeldlinien in alle Richtungen gleich gut verteilt verlaufen. Außerdem eignen sich elektrische Bauteile hergestellt aus kompaktierten und gesinterten Pulver aufgrund der sehr kleinen Partikelgröße eher für hochfrequente Anwendungen, wohingegen für die im Rahmen der vorliegenden Erfindung angestrebten Bauteile aufgrund der bedeutend größeren Geometrie eine niederfrequente Anwendung, wie beispielsweise Statoren geeignet ist.

Die vorbestimmte Form kann eine Vorform des Bauteils sein. Dabei kann das Verfahren weiterhin umfassen:
- Bereitstellen mindestens eines zweiten Umformwerkzeugs, wobei das zweite Umformwerkzeug mindestens einen zweiten Stempel und eine zweite Matrize umfasst,
- Anordnen der Vorform des Bauteils in der zweiten Matrize, und
- Umformen der Vorform des Bauteils mittels des zweiten Umformwerkzeugs zum Ausbilden einer Endform des Bauteils.

Entsprechend kann das elektrische Bauteile durch mindestens zweimaliges Umformen hergestellt werden. Dabei wird zunächst eine Vorform und anschließend die Endform ausgeformt.

Die vorbestimmte Form kann eine Endform des Bauteils sein. Entsprechend kann alternativ auch mittels eines einmaligen Umformvorgangs die Endform des elektrischen Bauteils ausgeformt werden.

Das Umformen mittels des ersten Umformwerkzeugs kann Kompaktieren und/oder Vorkompaktieren und/oder Verdichten der Späne umfassen. So kann zunächst eine Art Brikett aus den Spänen hergestellt werden.

Die Späne können hergestellt sein durch Zerkleinern mindestens eines Werkstücks hergestellt aus mindestens einem Material, das Metall aufweist. Dabei kann das Zerkleinern des Werkstücks hergestellt aus mindestens einem Material, das Metall aufweist, Teil des Verfahrens sein oder aber getrennt in der Herstellungskette erfolgen. Entsprechend können die Späne gezielt durch Einstellen des Zerkleinerungsgrads bzw. der Größenverteilung hergestellt werden, sofern diese nicht ohnehin als Abfallprodukt aus der Herstellung anderer metallischer Werkstücke anfallen. Zudem wird dadurch eine gezielte dreidimensionale Flussführung erlaubt sowie die Leistungsfähigkeit der so hergestellten elektrischen Bauteile gezielt bei der Herstellung durch Einstellung der Größenverteilung der Späne beeinflusst.

Das Verfahren kann weiterhin Reinigen der Späne vor dem elektrischen Isolieren umfassen. Damit werden Verunreinigungen beseitigt und die nachfolgend aufgebrachte elektrische Isolierung kann besser an den Spänen haften.

Das elektrische Isolieren kann Phosphatieren, Lackieren und/oder Oxidieren der Späne umfassen. Entsprechend kann die elektrische Isolierung auf verschiedene Weisen auf die Späne aufgebracht werden.

Das Verfahren kann weiterhin Glühen der Späne vor dem Anordnen der Späne in der ersten Matrize umfassen. Alternativ oder zusätzlich kann das Verfahren weiterhin Glühen der vorbestimmten Form umfassen. Damit lassen sich gezielt Werkstoffeigenschaften der Späne bzw. der vorbestimmten Form beeinflussen. Insbesondere können die Späne vor dem Kompaktieren noch geglüht werden, um potentielle Eigenspannungen sowie Verfestigungen aufgrund von Kaltverfestigung oder starker Temperaturgradienten bei der Spanerzeugung zu reduzieren. Es kann jedoch ebenso ein Glühen der vorbestimmten Form nach dem Kompaktieren bzw. Umformen erfolgen. Das abschließende Glühen kann beispielsweise durchgeführt werden, um die elektrische Leitfähigkeit zu beeinflussen, insbesondere zu erhöhen.

Das Verfahren kann weiterhin Einbringen mindestens eines Bindemittels zwischen die Späne vor dem Umformen der Späne zu der vorbestimmten Form umfassen. Das Einbringen des Bindemittels kann vor dem Anordnen der Späne in der ersten Matrize oder nach dem Anordnen und vor dem Umformen der Späne in der ersten Matrize erfolgen. Damit lässt sich der Zusammenhalt zwischen den einzelnen isolierten Spänen verbessern.

Das mindestens eine Bindemittel kann mindestens einen Klebstoff und/oder Backlack aufweisen. Um den Zusammenhalt zwischen den einzelnen isolierten Spänen zu begünstigen, können zusätzliche Bindemittel eingesetzt werden, wie beispielsweise Klebstoffe oder auch die in der Rotor- und Statorherstellung verwendeten Backlacke.

Das Verfahren kann weiterhin Zuführen von Metallpulver zu den Spänen umfassen. Dies kann einerseits die Metalldichte im Bauteil erhöhen und andererseits zusammen mit einem Bindemittel den Zusammenhalt der Späne verbessern. Das Metallpulver kann dabei unabhängig von einem Bindemittel eingesetzt werden. Dieses Metallpulver kann auch elektrisch isoliert werden (ähnlich SMC) und dient der Steigerung der Werkstoffdichte nicht jedoch dem Zusammenhalt.

Das Verfahren kann weiterhin Orientieren der Späne vor dem Umformen der Späne zu der vorbestimmen Form in der ersten Matrize umfassen. Weiterhin ist es möglich, die Späne vor dem Kompaktieren in spezieller Art zu orientieren, um günstige magnetische Eigenschaften nach dem Kompaktieren zu erzielen.

Das Orientieren der Späne kann mittels eines Magnetfelds und/oder einer definierten Streutechnik und/oder Vibration erfolgen.

Das Orientieren der Späne kann vor dem Anordnen der Späne in der ersten Matrize oder in der ersten Matrize erfolgen.

Das Verfahren kann weiterhin thermisches Behandeln, insbesondere Ausbacken, der vorbestimmten Form umfassen. Dabei kann sowohl eine Vorform und/oder eine Endform des elektrischen Bauteils thermisch behandelt werden. Bei Verwendung eines zusätzlichen Bindemittels können die erforderlichen Zwischenschritte zum Aushärten des Bindemittels durchgeführt werden, wie beispielsweise Wärmebehandlung in einem Ofen zum Aushärten eines Klebstoffs oder Ausbacken eines Backlacks. Aber auch ohne Einsatz eines Bindemittels lassen sich durch thermisches Behandeln gezielt die Werkstoffeigenschaften des elektrischen Bauteils beeinflussen.

Das Verfahren kann weiterhin Kalibrieren der vorbestimmten Form umfassen. So kann nach dem Ausbacken eine weitere Kalibrierung der Geometrie mittels einer weiteren Umformoperationen erfolgen, wie beispielsweise durch ein erneutes Voll-Vorwärts-Fließpressen, Abstreckgleitziehen oder ein ähnliches geeignetes Umformverfahren. Das Kalibrieren kann insbesondere in einem dritten Umformwerkzeug erfolgen, das einen dritten Stempel und eine dritte Matrize aufweist.

Das Verfahren kann weiterhin Vorkompaktieren der Späne vor dem Anordnen der Späne in der ersten Matrize umfassen. Mit anderen Worten kann vor dem eigentlichen Umformschritt in dem ersten Umformwerkzeug ein Vorkompaktieren erfolgen. Bei dem Vorkompaktieren wird aus den zuvor losen Spänen unter geringem Kraftaufwand ein Verbundkörper mit noch nicht finaler Dichte und mit einer magnetischen Vorzugsrichtung erzeugt. Die magnetische Vorzugsrichtung kann durch ein magnetisches Ausrichten der Späne innerhalb des Vorkompaktierwerkzeugs erreicht werden. Die Matrize wird zudem beim Vorkompaktieren nicht so stark belastet. Daher kann sie vergleichsweise einfach ausgeführt werden, wie beispielsweise ohne Armierung. Das zweite Werkzeug, das aufgrund einer Armierung vergleichsweise teuer ist, muss nicht mehr so hoch ausgeführt werden, da bereits weniger Relativbewegung zum Umformen erforderlich ist. Durch die geringere Belastung können im ersten Werkzeug "Schwachstellen" wie die Magnete zur Orientierung eingefügt werden.

Das Verfahren kann auch mehr als zwei Umformoperationen aufweisen.

Das Verfahren kann weiterhin Herstellen mehrerer elektrischer Bauteile und Anordnen der mehreren elektrischen Bauteile zu einem Endbauteil umfassen. Entsprechend können mehrere so hergestellte elektrische Bauteile zum Ausbilden eines Gesamtbauteils verwendet werden.

Das Verfahren kann weiterhin Verbinden der mehreren elektrischen Bauteile umfassen. Das verbinden kann dabei in lösbarer oder unlösbarer Form erfolgen.

Das elektrische Bauteil kann ein induktives Bauteil sein oder aufweisen, insbesondere ein Bauteil mit einer Spule, ein Rotor, ein Stator, Segment eines Stators für einen Elektromotor oder ein Bauteil eines Transformators. Entsprechend eignet sich das Verfahren grundsätzlich zum Herstellen eines elektrischen Bauteils in jeder Form von Spulen oder weiteren Elementen, in welchen eine Leitung eines Magnetfeldes notwendig ist.

Erfindungsgemäß wird weiterhin ein elektrisches Bauteil erhalten oder erhältlich durch ein Verfahren nach einem der vorstehend oder nachstehend beschriebenen Ausführungsformen vorgeschlagen.

Ein solches elektrisches Bauteil kann ein induktives Bauteil sein oder aufweisen, insbesondere ein Bauteil mit einer Spule, ein Rotor, ein Stator, Segment eines Stators für einen Elektromotor oder ein Bauteil eines Transformators.

Der Begriff "elektrisches Bauteil", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Bauteil beziehen, das Teil einer elektrischen Schaltung ist oder mit einer elektrischen Schaltung verbindbar ist und dadurch elektrische Eigenschaften aufweist und das physisch nicht weiter unterteilt werden kann, ohne seine Funktion zu verlieren. Der Begriff kann sich insbesondere auf einen Träger einer physikalischen oder elektronisch realisierbaren Eigenschaft, auch in der Form eines idealisierten Bauteils, und/oder ein reales (diskretes) Bauteil beziehen. Das elektrische Bauteil kann dabei insbesondere weichmagnetische Eigenschaften aufweisen. Das elektrische Bauteil kann wiederum aus Bauteilen zusammengesetzt sein.

Der Begriff "Späne", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf mechanisch abgetragene Teilchen von einem bearbeiteten Werkstück beziehen. Insbesondere bezieht sich der Begriff dabei auf einen Span aus Metall. Grundsätzlich entsteht Span bei jeder Art spanender Bearbeitung von Festkörpern. Späne kann aber auch durch andere Arten von mechanischen Verfahren hergestellt werden, wie beispielsweise Zersägen, Zerkleinern, Schreddern, Trommeln und dergleichen. Späne haben keine einheitliche Größe, sondern umfassen eine inhomogene Größenverteilung. Weiterhin haben Späne keine einheitliche Form, sondern umfassen eine Mehrzahl von unterschiedlichen Formen.

Der Begriff "elektrisches Isolieren", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Verfahrensschritt mit dem Ziel beziehen, den elektrischen Stromfluss zwischen einem elektrischen Leiter bzw. elektrisch leitfähigen Bauteil und seiner Umgebung zu unterbinden oder behindern. Zu diesem Zweck wird ein Isolierstoff (auch Isoliermittel) zwischen den elektrischen Leiter bzw. Bauteil und seiner Umgebung vorgesehen. Ein Isolierstoff ist ein nichtleitendes Material, das also nur eine extrem geringe und somit vernachlässigbare elektrische Leitfähigkeit hat. Isolierstoffe werden verwendet, um den elektrischen Stromfluss auf die spannungsführenden Teile zu begrenzen.

Der Begriff "Umformen", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann sich, ohne Beschränkung, insbesondere auf ein Fertigungsverfahren gemäß DIN8580 beziehen. In einem engeren Sinn kann sich der Begriff auf Massivumformen beziehen, bei dem ein dreidimensionaler Körper umgeformt wird. Es handelt sich also um Verfahren, bei denen Rohteile aus plastischen Werkstoffen, wie beispielsweise Metalle und thermoplastische Kunststoffe, gezielt in eine andere Form gebracht werden, ohne dabei Material von den Rohteilen zu entfernen wie beim Trennen oder hinzuzugeben wie beim Fügen. Der Werkstoff behält seine Masse und seinen Zusammenhalt bei. Beim Trennen und Fügen wird die Masse und der Zusammenhalt dagegen vermindert beziehungsweise vermehrt. Umformen unterscheidet sich von Verformen dadurch, dass die Formänderung gezielt eingebracht wird. Verformung dagegen ist eine ungezielte plastische Formänderung.

Der Begriff "Umformwerkzeug", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann sich, ohne Beschränkung, insbesondere auf eine Maschine zum Umformen eines Werkstoffs oder Halbzeugs beziehen. Umformwerkzeuge bestehen in aller Regel aus einer Matrize, einem Stempel und einer Kavität. In Abhängigkeit von dem jeweiligen Umformwerkzeug kann dieses zusätzlich einen Gegenstempel als Gegenlager für den Stempel oder einen Auswerfer aufweisen. In den meisten Fällen führt der Stempel die zur Umformung benötigte Bewegung aus und die Matrize ist ortsfest. Dabei wird das eingebrachte Halbzeug verformt und in die Kavität gepresst. Die Kavität ist dabei in Abhängigkeit von dem jeweiligen Umformwerkzeug in dem Stempel oder in der Matrize angeordnet. Beispielsweise befindet sich die Kavität bei einem Umformwerkzeug für Voll-Vorwärtsfließpressen im Stempel und befindet sich bei einem Umformwerkzeug für Quer-Fließpressen in der Matrize. Bei den meisten Matrizen ist es aufgrund der hohen Innendrücke, hervorgerufen durch den Umformprozess, notwendig, die Matrize zu verstärken. Dieses Verstärken wird als Armieren bezeichnet. Bei diesem Verfahren wird mindestens ein sogenannter Armierungsring um die Matrize gelegt. Hierbei ist der Innendurchmesser des Armierungsrings geringfügig kleiner als der Außendurchmesser der Matrize. Es liegt folglich ein Übermaß vor.

Werden beide Teile gefügt, so wird der Armierungsring vorwiegend auf Zug beansprucht, wohingegen die Matrize überwiegend auf Druck beansprucht wird. Zu Beginn des Umformprozesses liegt folglich ein Druckspannungszustand in der Matrize vor. Bevor nun die Matrize überhaupt auf Zug beansprucht werden kann muss dieser Druckspannungszustand überwunden werden. Idealerweise ist die Übermaßpassung so bemessen, dass zu keinem Zeitpunkt des Prozesses positive Dehnungsanteile in der Matrize auftreten. Durch das Armieren der Matrizen kann deren Beanspruchbarkeit gesteigert werden.

Der Begriff "Halbzeug", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann sich, ohne Beschränkung, insbesondere auf ein Vormaterial beziehen, also vorgefertigtes Rohmaterial und Werkstücke oder Halbfabrikate der einfachsten Form. Sie bestehen in der Regel aus einem einzelnen Material, welches lediglich in eine grundlegende geometrische Form gebracht wurde. Als Halbzeuge werden beispielsweise einfache Profile (Profilstahl, Konstruktionsprofile), Stangen, Rohre und Platten aus Metall bezeichnet. Werkstücke, die bereits in einem vorbereitenden Fertigungsschritt eine individuelle Form erhalten haben, aber noch für weitere Fertigungsschritte vorgesehen sind, werden auch als Rohling bezeichnet. Der Ausdruck Halbzeug kann sich somit auf ein Material im ungeformten Zustand sowie in einem Zustand während einer Umformung und somit im teilweisen umgeformten Zustand beziehen. Nach Abschluss der Umformung und somit im fertig umgeformten Zustand wird das Halbzeug als Pressteil oder Bauteil bezeichnet.

Der Begriff "Werkstück", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann sich, ohne Beschränkung, insbesondere auf ein einzelnes abgegrenztes Teil weitgehend festen Materials beziehen, das in irgendeiner Form bearbeitet wurde. Mit anderen Worten, kann sich der Begriff Werkstück auf ein Halbzeug beziehen, das in der Verarbeitungskette bereits mindestens einen Verarbeitungsschritt durchlaufen hat und das für einen weiteren Verarbeitungsschritt vorgesehen ist.

Der Begriff "Bauteil", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann sich, ohne Beschränkung, insbesondere auf ein fertig bearbeitetes Werkstück beziehen. Mit anderen Worten, kann sich der Begriff Bauteil auf ein Werkstück beziehen, das in der Verarbeitungskette bereits sämtliche Verarbeitungsschritte durchlaufen hat.

Der Begriff "vorbestimmte Form", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann sich, ohne Beschränkung, insbesondere auf eine Endform eines herzustellenden Bauteils beziehen, bei dem keine oder nur geringfügige Nachbearbeitungen erfolgen, oder eine Vorform, die somit in nachfolgenden weiteren Bearbeitungsschritten, wie beispielsweise durch weiteres oder erneutes Umformen, in seine Endform gebracht wird.

Der Begriff "Kompaktieren", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf das Zusammendrücken von zumeist in Teilen vorhandenen Materialien beziehen. Ziel dieses Vorgangs ist es, dadurch einen festen Zusammenhalt und eine höhere Dichte der Teile zu erreichen.

Der Begriff "Verdichten", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein (allseitiges) Zusammendrücken eines Körpers oder massegefüllten Raumes beziehen, welches sein Volumen verringert und seine Dichte (Massendichte) erhöht. Im Rahmen der vorliegenden Erfindung kann es sich insbesondere um einen dem Kompaktieren nachfolgenden Verfahrensschritt handeln, bei dem die Dichte des durch Kompaktieren gefertigten Werkstücks noch weiter erhöht wird, z.B. von 95% auf 98%. Der Umformprozess beim Verdichten kann dabei auch ein anderer Umformprozess sein, wie er beim Kompaktieren verwendet wird, wie z.B. Voll-Vorwärts-Fließpressen, Abstreckgleitziehen.

Der Begriff "Glühen", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf das Anwärmen, Durchwärmen und Abkühlen von Halbzeugen und Werkstücken zur Erzielung definierter Werkstoffeigenschaften beziehen. Glühen ist ein Teilgebiet der Wärmebehandlung und zählt nach DIN 8580 zu den Fertigungsverfahren durch Änderung der Stoffeigenschaft. Man unterteilt den Glühvorgang in mindestens drei Phasen. Die erste Phase ist das Anwärmen, auch Aufwärmen oder Hochwärmen genannt. In der Anwärmphase wird das Werkstück auf die Haltetemperatur gebracht. Die zweite Phase ist das Halten. In der Haltephase wird das Werkstück bei einer konstanten Haltetemperatur gehalten. Sie dient dem Temperaturausgleich im Werkstück und der Gleichgewichtseinstellung chemischer und physikalischer Vorgänge im Werkstoff. Die dazu notwendige Dauer wird Haltezeit genannt und ist außer von dem zu erzielenden Ergebnis auch von der Werkstückgeometrie und der Anordnung der Werkstücke im Glühofen bzw. der Wärmebehandlungsanlage abhängig. Die dritte Phase ist das Abkühlen. In der Abkühlphase wird das Werkstück wieder auf Umgebungstemperatur gebracht. Sowohl in der Anwärm- als auch in der Abkühlphase kann die Einhaltung spezifischer Anwärm- und Abkühlgeschwindigkeiten erforderlich sein.

Der Begriff "Bindemittel", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf Stoffe beziehen, die an Phasengrenzen anderer Stoffe chemische Bindungen herstellen oder begünstigen oder Effekte wie Kohäsion, Adsorption und Adhäsion bzw. Reibung auslösen oder vergrößern. Sie verbinden Stoffe, indem sie diese aufnehmen, anlagern, zusammenhalten, vernetzen oder verkleben.

Der Begriff "Klebstoff", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen nichtmetallischen Stoff beziehen, der in der Lage ist, Werkstoffe durch Oberflächenhaftung (Adhäsion) und seine innere Festigkeit (Kohäsion) zu verbinden. Es handelt sich also um einen Prozesswerkstoff, der beim Fügeverfahren Kleben zum Verbinden verschiedener Werkstoffe verwendet wird. Zusätzlich zu der lastübertragenden Wirkung können Klebstoffe in den Verbindungen weitere Funktionen übernehmen, wie z. B. Schwingungsdämpfung, Abdichten gegen Flüssigkeiten und Gase, Ausgleich unterschiedlicher Fügeteildynamiken, Korrosionsschutz, thermische und elektrische Isolation oder Leitfähigkeit.

Der Begriff "Backlack", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Klebstoff oder eine Beschichtung mit elektrisch isolierenden Eigenschaften beziehen.

Der Begriff "Kalibrieren", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Vorgang beziehen, bei dem die bis zu diesem Schritt vorliegenden, kompaktierten Bauteile in einem geschlossenen oder halbgeschlossenen Werkzeug erneut umgeformt werden, um die Soll-Geometrie exakt einzustellen.

Der Begriff "Elektromotor", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen elektromechanischen Wandler (elektrische Maschine) beziehen, der elektrische Leistung in mechanische Leistung umwandelt. In herkömmlichen Elektromotoren erzeugen stromdurchflossene Leiterspulen Magnetfelder, deren gegenseitige Anziehungs- und Abstoßungskräfte in Bewegung umgesetzt werden. Damit ist der Elektromotor das Gegenstück zum sehr ähnlich aufgebauten Generator, der Bewegungsleistung in elektrische Leistung umwandelt. Elektromotoren erzeugen meist rotierende Bewegungen, sie können aber auch für translatorische Bewegungen gebaut sein (Linearantrieb). Elektromotoren werden zum Antrieb vieler Gerätschaften, Arbeitsmaschinen und Fahrzeuge eingesetzt.

Der Begriff "Stator", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf den feststehenden, unbeweglichen Teil eines beziehen. Der Stator ist häufig zugleich das Gehäuse bei Elektromotoren. Der Stator dient üblicherweise als gemeinsamer Kern für die Induktionsspulen.

Ferner wird im Rahmen der vorliegenden Erfindung ein Computerprogramm vorgeschlagen, das bei Ablauf auf einem Computer oder Computer-Netzwerk das erfindungsgemäße Verfahren in einer seiner Ausgestaltungen ausführt.

Weiterhin wird im Rahmen der vorliegenden Erfindung ein Computerprogramm mit Programmcode-Mitteln vorgeschlagen, um das erfindungsgemäße Verfahren in einer seiner Ausgestaltungen durchzuführen, wenn das Programm auf einem Computer oder Computer-Netzwerk ausgeführt wird. Insbesondere können die Programmcode-Mittel auf einem computerlesbaren Datenträger und/oder einem computerlesbaren Speichermedium gespeichert sein.

Der Begriffe "computerlesbarer Datenträger" und "computerlesbares Speichermedium", wie sie hier verwendet werden, können sich insbesondere auf nicht-transitorische Datenspeicher beziehen, beispielsweise ein Hardware-Datenspeichermedium, auf welchem computer-ausführbare Instruktionen gespeichert sind. Der computerlesbare Datenträger oder das computerlesbare Speichermedium können insbesondere ein Speichermedium wie ein Random-Access Memory (RAM) und/oder ein Read-Only Memory (ROM) sein oder umfassen.

Außerdem wird im Rahmen der vorliegenden Erfindung ein Datenträger vorgeschlagen, auf dem eine Datenstruktur gespeichert ist, die nach einem Laden in einen Arbeits- und/oder Hauptspeicher eines Computers oder Computer-Netzwerkes das erfindungsgemäße Verfahren in einer seiner Ausgestaltungen ausführen kann.

Auch wird im Rahmen der vorliegenden Erfindung ein Computerprogramm-Produkt mit auf einem maschinenlesbaren Träger gespeicherten Programmcode-Mitteln vorgeschlagen, um das erfindungsgemäße Verfahren in einer seiner Ausgestaltungen durchzuführen, wenn das Programm auf einem Computer oder Computer-Netzwerk ausgeführt wird.

Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger und kann insbesondere über ein Daten-übertragungsnetz verteilt werden.

Schließlich wird im Rahmen der vorliegenden Erfindung ein moduliertes Datensignal vorgeschlagen, welches von einem Computersystem oder Computernetzwerk ausführbare Instruktionen zum Ausführen eines Verfahrens nach einer der beschriebenen Ausführungsformen enthält.

Im Hinblick auf die computer-implementierten Aspekte der Erfindung können einer, mehrere oder sogar alle Verfahrensschritte des Verfahrens gemäß einer oder mehreren der hier vorgeschlagenen Ausgestaltungen mittels eines Computers oder Computer-Netzwerks durchgeführt werden. Somit können, allgemein, jegliche der Verfahrensschritte, einschließlich der Bereitstellung und/oder Manipulation von Daten mittels eines Computers oder Computer-Netzwerks durchgeführt werden. Allgemein können diese Schritte jegliche der Verfahrensschritte umfassen, ausgenommen der Schritte, welche manuelle Arbeit erfordern, beispielsweise das Bereitstellen von Proben und/oder bestimmte Aspekte der Durchführung tatsächlicher Messungen.

Zusammenfassend werden, ohne Beschränkung weiterer möglicher Ausgestaltungen, folgende Ausführungsformen vorgeschlagen:
Ausführungsform 1: Verfahren zum Herstellen eines elektrischen Bauteils, umfassend:
   - Bereitstellen von Spänen, wobei die Späne aus mindestens einem Material hergestellt sind, das Metall aufweist,
   - elektrisches Isolieren der Späne zueinander,
   - Bereitstellen mindestens eines ersten Umformwerkzeugs, wobei das erste Umformwerkzeug mindestens einen ersten Stempel und eine erste Matrize umfasst,
   - Anordnen der elektrisch isolierten Späne in der ersten Matrize und
   - Umformen der elektrisch isolierten Späne mittels des ersten Umformwerkzeugs zu einer vorbestimmten Form.
Ausführungsform 2: Verfahren nach der vorhergehenden Ausführungsform, wobei die vorbestimmte Form eine Vorform des Bauteils ist, wobei das Verfahren weiterhin umfasst:
   - Bereitstellen mindestens eines zweiten Umformwerkzeugs, wobei das zweite Umformwerkzeug mindestens einen zweiten Stempel und eine zweite Matrize umfasst,
   - Anordnen der Vorform des Bauteils in der zweiten Matrize, und
   - Umformen der Vorform des Bauteils mittels des zweiten Umformwerkzeugs zum Ausbilden einer Endform des Bauteils.
Ausführungsform 3: Verfahren nach Ausführungsform 1, wobei die vorbestimmte Form eine Endform des Bauteils ist.
Ausführungsform 4: Verfahren nach einer der vorhergehenden Ausführungsformen, wobei das Umformen mittels des ersten Umformwerkzeugs Kompaktieren und/oder Vorkompaktieren und/oder Verdichten der Späne umfasst.
Ausführungsform 5: Verfahren nach einer der vorhergehenden Ausführungsformen, wobei die Späne hergestellt sind durch Zerkleinern mindestens eines Werkstücks hergestellt aus mindestens einem Material, das Metall aufweist.
Ausführungsform 6: Verfahren nach einer der vorhergehenden Ausführungsformen, weiterhin umfassend Reinigen der Späne vor dem elektrischen Isolieren.
Ausführungsform 7: Verfahren nach einer der vorhergehenden Ausführungsformen, wobei das elektrische Isolieren Phosphatieren, Lackieren und/oder Oxidieren der Späne umfasst.
Ausführungsform 8: Verfahren nach einer der vorhergehenden Ausführungsformen, weiterhin umfassend Glühen der Späne vor dem Anordnen der Späne in der ersten Matrize und /oder der vorbestimmten Form.
Ausführungsform 9: Verfahren nach einer der vorhergehenden Ausführungsformen, weiterhin umfassend Einbringen mindestens eines Bindemittels zwischen die Späne vor dem Umformen der Späne zu der vorbestimmten Form.
Ausführungsform 10: Verfahren nach der vorhergehenden Ausführungsform, wobei das mindestens eine Bindemittel mindestens einen Klebstoff und/oder Backlack aufweist.
Ausführungsform 11: Verfahren nach einem der vorhergehenden Ausführungsformen, weiterhin umfassend Zuführen von Metallpulver zu den Spänen.
Ausführungsform 12: Verfahren nach einer der vorhergehenden Ausführungsformen, weiterhin umfassend Orientieren der Späne vor dem Umformen der Späne zu der vorbestimmen Form in der ersten Matrize.
Ausführungsform 13: Verfahren nach der vorhergehenden Ausführungsform, wobei das Orientieren der Späne mittels eines Magnetfelds und/oder einer definierten Streutechnik und/oder Vibration erfolgt.
Ausführungsform 14: Verfahren nach einer der beiden vorhergehenden Ausführungsformen, wobei das Orientieren der Späne vor dem Anordnen der Späne in der ersten Matrize oder in der ersten Matrize erfolgt.
Ausführungsform 15: Verfahren nach einer der vorhergehenden Ausführungsformen, weiterhin umfassend thermisches Behandeln, insbesondere Ausbacken, der vorbestimmten Form.
Ausführungsform 16: Verfahren nach einer der vorhergehenden Ausführungsformen, weiterhin umfassend Kalibrieren der vorbestimmten Form, insbesondere mittels eines dritten Umformwerkzeugs, das einen dritten Stempel und eine dritte Matrize aufweist.
Ausführungsform 17: Verfahren nach einer der vorhergehenden Ausführungsformen, weiterhin umfassend Vorkompaktieren der Späne vor dem Anordnen der Späne in der ersten Matrize.
Ausführungsform 18: Verfahren nach einer der vorhergehenden Ausführungsformen, weiterhin umfassend Herstellen mehrerer elektrischer Bauteile und Anordnen der mehreren elektrischen Bauteile zu einem Endbauteil.
Ausführungsform 19: Verfahren nach der vorhergehenden Ausführungsform, weiterhin umfassend Verbinden der mehreren elektrischen Bauteile.
Ausführungsform 20: Verfahren nach einer der vorhergehenden Ausführungsformen, wobei das elektrische Bauteil ein induktives Bauteil ist oder aufweist, insbesondere ein Bauteil mit einer Spule, ein Rotor, ein Stator, Segment eines Stators für einen Elektromotor oder ein Bauteil eines Transformators.
Ausführungsform 21: Elektrisches Bauteil erhalten oder erhältlich durch ein Verfahren nach einer der vorhergehenden Ausführungsformen.
Ausführungsform 22: Elektrisches Bauteil nach der vorhergehenden Ausführungsform, wobei das elektrische Bauteil ein induktives Bauteil ist oder aufweist, insbesondere ein Bauteil mit einer Spule, ein Rotor, ein Stator, Segment eines Stators für einen Elektromotor oder ein Bauteil eines Transformators.

### Kurze Beschreibung der Figuren

Weitere Einzelheiten und Merkmale ergeben sich aus der nachfolgenden Beschreibung von Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigen:
- Figur 1: eine perspektivische Ansicht eines erfindungsgemäßen elektrischen Bauteils;
- Figuren 2 bis 8: eine schematische Darstellung eines Ablaufs eines erfindungsgemäßen Verfahrens zum Herstellen eines elektrischen Bauteils und
- Figur 9: ein Ablaufdiagramm des erfindungsgemäßen Verfahrens.

### Beschreibung der Ausführungsbeispiele

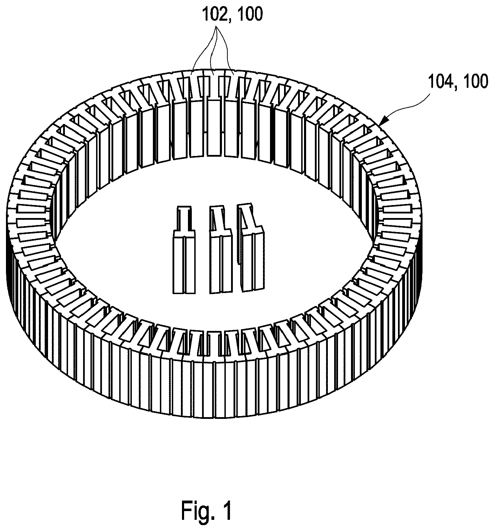

Figur 1 zeigt ein erfindungsgemäßes elektrisches Bauteil 100. Das elektrische Bauteil 100 ist bei dem gezeigten Ausführungsbeispiel ein Segment 102 eines Stators 104 für einen Elektromotor (nicht näher gezeigt). Der Stator 104 wird gebildet, indem mehrere Segmente 102 zu einem Kreis um einen gemeinsamen Mittelpunkt angeordnet und miteinander verbunden werden. Beispielsweise werden 60 Segmente 102, die sich jeweils 6° in Umfangsrichtung um einen gemeinsamen Mittelpunkt erstrecken, angeordnet und miteinander verbunden, um so den Stator 104 zu bilden. Es versteht sich, dass auch mehr oder weniger Segmente 102 zum Bilden des Stators 104 verwendet werden können, sofern sich diese weiter in Umfangsrichtung erstrecken. Beispielsweise werden 24 Segmente 102, die sich jeweils 15° in Umfangsrichtung um einen gemeinsamen Mittelpunkt erstrecken, angeordnet und miteinander verbunden, um so den Stator 104 zu bilden.

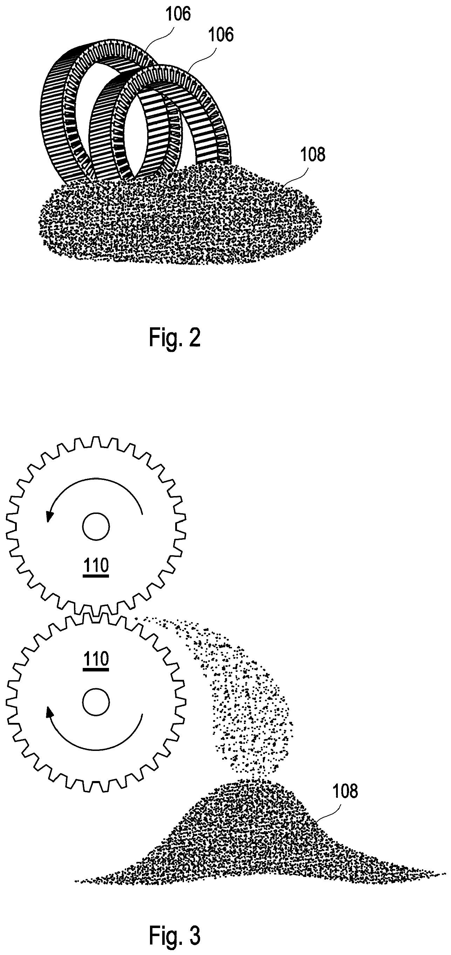

Die Figuren 2 bis 8 zeigen eine schematische Darstellung eines Ablaufs eines erfindungsgemäßen Verfahrens zum Herstellen eines elektrischen Bauteils 100. Figur 2 zeigt dabei einen optionalen Schritt, in dem mindestens ein Werkstück 106 bereitgestellt wird. Das Werkstück 106 ist aus einem Material hergestellt, das Metall aufweist. Das Werkstück 106 besteht vorzugsweise aus defekten Blechpaketen elektrischer Maschinen oder anderen ähnlichen Bauteilen, wie beispielsweise Transformatoren. Alternativ kann bereits Material, das Metall aufweist, in Form von Spänen 108 (Figur 3) vorliegen.

Figur 3 zeigt einen nachfolgenden optionalen Schritt, in dem Späne 108 bereitgestellt werden, die durch Zerkleinern des Werkstücks 106 hergestellt werden. Die Späne 108 sind entsprechend ebenfalls aus mindestens einem Material hergestellt, das Metall aufweist. Lediglich beispielhaft ist ein Verkleinerungsprozess mittels zwei gegenläufig rotierenden Zerkleinerungswalzen 110 dargestellt.

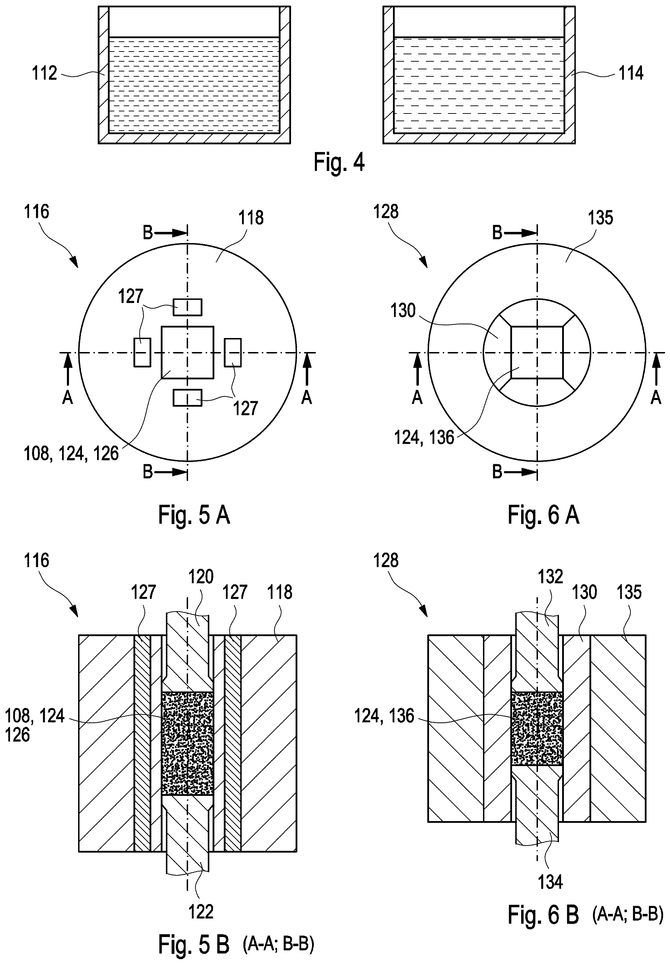

Figur 4 zeigt einen nachfolgenden Schritt, in dem die so bereitgestellten Späne 108 nachfolgend zueinander elektrisch isoliert werden. Das elektrische Isolieren umfasst grundsätzlich Phosphatieren, Lackieren und/oder Oxidieren der Späne 108. Lediglich beispielhaft ist in Figur 4 dargestellt, dass die Späne 108 in einem Oxidationsbad 112 elektrisch isoliert werden. Wie weiter in Figur 4 dargestellt ist, werden die Späne 108 vor dem elektrischen Isolieren gereinigt. Lediglich beispielhaft ist in Figur 4 dargestellt, dass die Späne 108 in einem Reinigungsbad 114 gereinigt werden.

Die Figuren 5A und 5B zeigen einen nachfolgenden Schritt, in dem mindestens ein erstes Umformwerkzeug 116 bereitgestellt wird. Figur 5A zeigt dabei eine Draufsicht auf das erste Umformwerkzeug 116. Figur 5B zeigte eine Schnittansicht entlang der Linie A-A bzw. B-B der Figur 5A. Das erste Umformwerkzeug 116 umfasst mindestens eine erste Matrize 118, und einen ersten Stempel 120. Weiterhin umfasst das Umformwerkzeug 116 einen ersten Auswerfer 122 oder ersten Gegenstempel. Die elektrisch isolierten Späne 108 werden in der ersten Matrize 118 angeordnet.

Sind die Späne 108 in der ersten Matrize 118 angeordnet, werden die elektrisch isolierten Späne 108 mittels des ersten Umformwerkzeugs 116 zu einer vorbestimmten Form 124 umgeformt. Das Umformen mittels des ersten Umformwerkzeugs 116 kann insbesondere Kompaktieren und/oder Vorkompaktieren und/oder Verdichten der Späne 108 umfassen. Dabei kann mittels des Umformens mittels des ersten Umformwerkzeugs 116 eine Vorform 126 des Bauteils 100 ausgebildet werden. Mit anderen Worten ist bei dieser Verfahrensvariante die vorbestimmte Form 124 eine Vorform 126 des Bauteils 100. Die Vorform 126 ist beispielsweise ein Brikett. Die Vorform 126 ist in Figur 5A und Figur 5B beispielhaft als Körper mit quadratischem Querschnitt dargestellt. Die Vorform 126 kann auch einen beliebigen anderen Querschnitt aufweisen. Zuvor können noch optionale Verfahrensschritte ausgeführt werden. Diese optionalen Verfahrensschritte können dabei alternativ zueinander oder kumulativ durchgeführt werden. Das Verfahren kann ein Glühen der Späne 108 vor dem Anordnen der Späne 108 in der ersten Matrize 118 umfassen. Weiterhin kann das Verfahren Einbringen mindestens eines Bindemittels zwischen die Späne 108 vor dem Umformen der Späne 108 in der ersten Matrize 118 umfassen. Das mindestens eine Bindemittel kann mindestens einen Klebstoff und/oder Backlack aufweisen. Weiterhin kann das Verfahren ein Vorkompaktieren der Späne 108 umfassen. Außerdem können den Spänen 108 Metallpulver hinzugefügt werden. Weiterhin kann das Verfahren Orientieren der Späne 108 vor dem Anordnen der Späne 108 in der ersten Matrize 118 umfassen. Das Orientieren der Späne 108 kann mittels eines Magnetfelds und/oder einer definierten Streutechnik und/oder Vibration erfolgen. Das Magnetfeld kann beispielsweise mittels Magneten 127 erfolgen, die sich in der ersten Matrize 118 befinden. Beispielsweise sind die Magnete 127 gleichmäßig in Umfangsrichtung um eine Mittelachse der ersten Matrize 118 angeordnet. Lediglich beispielhaft sind in den Figuren 5A und 5B vier Magnete 127 dargestellt.

Das Verfahren kann weiterhin thermisches Behandeln der vorbestimmten Form 124 umfassen. Das thermische Behandeln kann insbesondere Ausbacken sein. Beispielsweise können bei Verwendung eines zusätzlichen Bindemittels erforderliche Zwischenschritte zum Aushärten des Bindemittels durchgeführt werden, wie beispielsweise Wärmebehandlung in einem Ofen zum Aushärten eines Klebstoffs oder Ausbacken eines Backlacks.

Bei der dargestellten Ausführungsform umfasst das Verfahren weiterhin die nachfolgend näher beschriebenen Schritte. Die Figuren 6A und 6B zeigen einen nachfolgenden Schritt, in dem mindestens ein zweites Umformwerkzeug 128 bereitgestellt wird. Figur 6A zeigt dabei eine Draufsicht auf das zweite Umformwerkzeug 128. Figur 6B zeigte eine Schnittansicht entlang der Linie A-A bzw. B-B der Figur 6A. Das zweite Umformwerkzeug 128 umfasst mindestens eine zweite Matrize 130 und einen zweiten Stempel 132. Das zweite Umformwerkzeug 128 umfasst weiterhin einen zweiten Auswerfer 134 oder zweiten Gegenstempel und einer Armierung 135. Die Armierung 135 umgibt die zweite Matrize 130 vollständig in Umfangsrichtung. Die Vorform 126 des Bauteils 100 wird in der zweiten Matrize 130 angeordnet. Dann wird die Vorform 126 des Bauteils 100 mittels des zweiten Umformwerkzeugs 128 zum Ausbilden einer Endform 136 des Bauteils 100 umgeformt. Die Endform 136 ist in Figur 6A und Figur 6B beispielhaft als Körper mit quadratischem Querschnitt dargestellt. Die Endform 136 kann auch einen beliebigen anderen Querschnitt aufweisen.

Die Endform 136 kann ein Segment 102 eines Stators 104 für einen Elektromotor sein (nicht näher gezeigt).

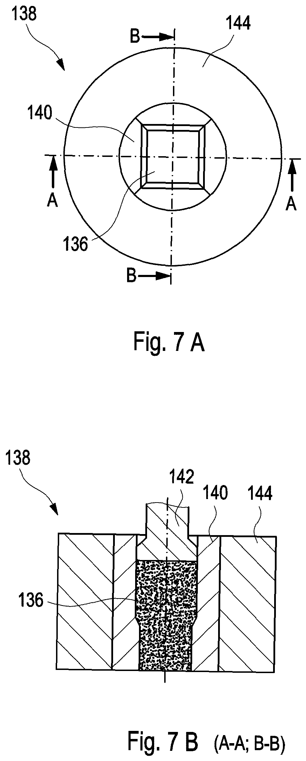

Die Figuren 7A und 7B zeigen einen nachfolgenden optionalen Schritt, in dem ein drittes Umformwerkzeug 138 bereitgestellt wird. Figur 7A zeigt dabei eine Draufsicht auf das dritte Umformwerkzeug 138. Figur 7B zeigte eine Schnittansicht entlang der Linie A-A bzw. B-B der Figur 7A. Das dritte Umformwerkzeug 138 umfasst mindestens eine dritte Matrize 140 und einen dritten Stempel 142. Das dritte Umformwerkzeug 138 umfasst weiterhin eine weitere Armierung 144. Die weitere Armierung 144 umgibt die dritte Matrize 140 vollständig in Umfangsrichtung. Zusätzlich kann das Verfahren optional weiterhin Kalibrieren der vorbestimmten Form 124 umfassen. Mit anderen Worten wird das kompaktierte Bauteil 136 in einem geschlossenen oder halbgeschlossenen Werkzeug erneut umgeformt, um die Soll-Geometrie exakt einzustellen oder den Werkstoff weiter zu verdichten. Beispielsweise kann nach dem Ausbacken eine weitere Kalibrierung der Geometrie mittels einer weiteren Umformoperationen erfolgen, wie beispielsweise erneutes Voll-Fließpressen oder Abstreckgleitziehen. Dabei kann die Kalibrierung der Geometrie eine Veränderung der Form umfassen. Wie in Figur 7B zu erkennen ist, kann beispielsweise die dritte Matrize 140 in einem unteren Bereich einen kleineren Querschnitt als in einem oberen Bereich, in dem der dritte Stempel 142 bewegt wird, aufweisen. Entsprechend wird die Endform 136 im Vergleich zur Vorform 126 mit einem kleineren Außendurchmesser bzw. kleineren Außenabmessung ausgebildet. Die Endform 136 kann dabei nach dem Umformen auf der dem Stempel gegenüberliegenden Seite der dritten Matrize 140 ausgebschoben werden, beispielsweise indem eine weitere oder neue Vorform 126 in der dritten Matrize 140 angeordnet wird und beim Umformen die vorherige Endform aus der dritten Matrize 140 ausschiebt. Die Endform 136 ist in Figur 7A und Figur 7B beispielhaft als Körper mit quadratischem Querschnitt dargestellt. Die Endform 136 kann auch einen beliebigen anderen Querschnitt aufweisen, sodass die Schnittansichten entlang der Linie A-A bzw. B-B auch unterschiedlich sein können.

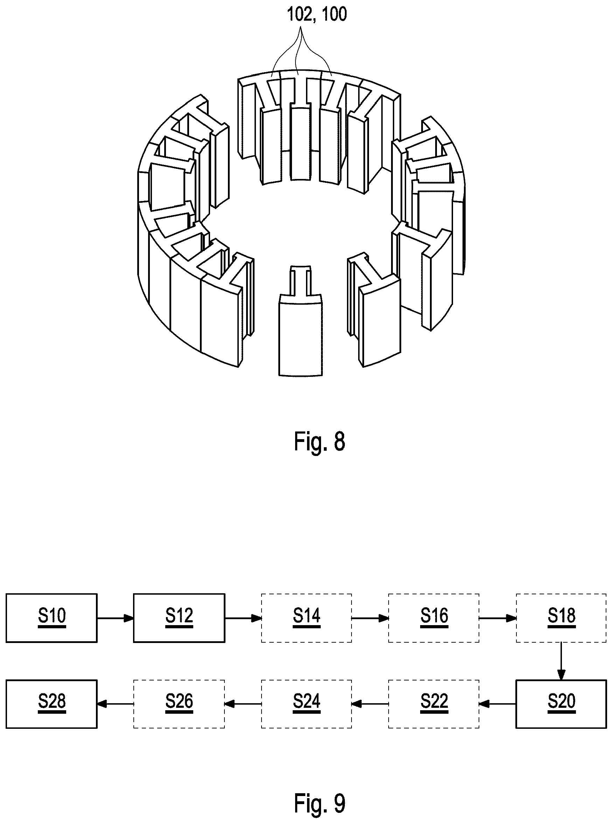

Figur 8 zeigt einen nachfolgenden Schritt, in dem mehrere auf die zuvor beschriebene Weise hergestellte Segmente 102 miteinander verbunden werden. So werden die Segmente 102 zu einem Kreis um einen gemeinsamen Mittelpunkt angeordnet und miteinander verbunden werden. Beispielsweise werden 24 Segmente 102, die sich jeweils 15° in Umfangsrichtung um einen gemeinsamen Mittelpunkt erstrecken, angeordnet und miteinander verbunden. Lediglich beispielhaft ist angedeutet, dass mittels des Verfahrens unterschiedlich hohe Segmente 102 hergestellt werden können. In einem nachfolgenden und abschließenden Schritt werden die mehreren Segmente 102 zu einem Kreis um einen gemeinsamen Mittelpunkt angeordnet und miteinander verbunden, um so den Stator 104 zu bilden.

Figur 9 zeigt ein Ablaufdiagramm des erfindungsgemäßen Verfahrens. Dabei wird nur eine Zusammenfassung der zuvor beschriebenen Verfahrensschritte gegeben und Figur 9 dient hauptsächlich der Veranschaulichung der zeitlichen Abfolge der jeweiligen Verfahrensschritte. Optionale Verfahrensschritte sind dabei in Kästchen mit gestrichelter Linie dargestellt.

Ein erster Schritt S10 stellt eine Vorbereitung der Späne 108 dar. Die Spänevorbereitung kann eine Erzeugung der Späne 108, wie beispielsweise mittels Zerkleinern, ein Trommeln und/oder ein Reinigen umfassen. In einem nachfolgenden Schritt S12 erfolgt ein elektrisches Isolieren der Späne 108, wie beispielsweise mittels Phosphatieren, Lackieren und/oder Oxidieren. In einem nachfolgenden optionalen Schritt S14 erfolgt ein Glühen der späne 108, wie beispielsweise ein Weichglühen und/oder Gefügeveränderung. In einem nachfolgenden optionalen Schritt S16 wird ein Zusammenhalt der Späne 108 verändert bzw. eingestellt, wie beispielsweise mittels eines Backlacks und/oder Polymers. In einem nachfolgenden optionalen Schritt S18 erfolgt ein Vorkompaktieren und/oder Orientieren der Späne 108, wie beispielsweise mittels eines Magnetfelds, Streutechnik und/oder Vibration. In einem nachfolgenden Schritt S20 erfolgt ein Kompaktieren der Späne 108, das beispielsweise ein Paketieren umfassen kann. In einem nachfolgenden optionalen Schritt S22 erfolgt ein Verdichten, wie beispielsweise mittels Voll-Vorwärts-Fließpressen, Abstreckgleitziehen und dergleichen. In einem nachfolgenden optionalen Schritt S24 erfolgt ein Ausbacken, das ein Aushärten des Polymers, eine Glühbehandlung und/oder ein Verbacken der elektrischen Isolation umfassen kann. In einem nachfolgenden optionalen Schritt S26 erfolgt ein Kalibrieren der kompaktierten Späne 108, wie beispielsweise mittels Voll-Vorwärts-Fließpressen, Abstreckgleitziehen und dergleichen. In einem nachfolgenden Schritt S28 erfolgt die Fertigstellung des Bauteils 100, wie beispielsweise eine Montage von Segmenten 102 zu einem Stator 104, oder die Entnahme des fertigen Bauteils 100.

### Bezugszeichenliste

- 100: elektrisches Bauteil
- 102: Segment
- 104: Stator
- 106: Werkstück
- 108: Späne
- 110: Zerkleinerungswalze
- 112: Oxidationsbad
- 114: Reinigungsbad
- 116: erstes Umformwerkzeug
- 118: erste Matrize
- 120: erster Stempel
- 122: erster Auswerfer
- 124: vorbestimmte Form
- 126: Vorform
- 127: Magnet
- 128: zweites Umformwerkzeug
- 130: zweite Matrize
- 132: zweiter Stempel
- 134: zweiter Auswerfer
- 135: Armierung
- 136: Endform
- 138: drittes Umformwerkzeug
- 140: dritte Matrize
- 142: dritter Stempel
- 144: weitere Armierung
- S10: Spänevorbereitung
- S12: Isolation
- S14: Glühen
- S16: Zusammenhalt einstellen
- S18: Vorkompaktieren und/oder Orientieren
- S20: Kompaktieren
- S22: Verdichten
- S24: Ausbacken
- S26: Kalibrieren
- S28: Bauteil fertigstellen

## Patentansprüche

1. Verfahren zum Herstellen eines elektrischen Bauteils (100), umfassend:
- Bereitstellen von Spänen (108), wobei die Späne (108) aus mindestens einem Material hergestellt sind, das Metall aufweist,
- elektrisches Isolieren der Späne (108) zueinander,
- Bereitstellen mindestens eines ersten Umformwerkzeugs (116), wobei das erste Umformwerkzeug (116) mindestens einen ersten Stempel (120) und eine erste Matrize (118) umfasst,
- Anordnen der elektrisch isolierten Späne (108) in der ersten Matrize (118), und
- Umformen der elektrisch isolierten Späne (108) mittels des ersten Umformwerkzeugs (116) zu einer vorbestimmten Form (124).

2. Verfahren nach dem vorhergehenden Anspruch, wobei die vorbestimmte Form (124) eine Vorform (126) des Bauteils (100) ist, wobei das Verfahren weiterhin umfasst:
- Bereitstellen mindestens eines zweiten Umformwerkzeugs (128), wobei das zweite Umformwerkzeug (128) mindestens einen zweiten Stempel (132) und eine zweite Matrize (130) umfasst,
- Anordnen der Vorform (126) des Bauteils (100) in der zweiten Matrize (130), und
- Umformen der Vorform (126) des Bauteils (100) mittels des zweiten Umformwerkzeugs (128) zum Ausbilden einer Endform (136) des Bauteils (100).

3. Verfahren nach Anspruch 1, wobei die vorbestimmte Form (124) eine Endform (136) des Bauteils (100) ist.

4. Verfahren nach einem der vorhergehenden Ansprüche, wobei das Umformen mittels des ersten Umformwerkzeugs (116) Kompaktieren und/oder Vorkompaktieren und/oder Verdichten der Späne (108) umfasst.

5. Verfahren nach einem der vorhergehenden Ansprüche, wobei die Späne (108) hergestellt sind durch Zerkleinern mindestens eines Werkstücks (106) hergestellt aus mindestens einem Material, das Metall aufweist.

6. Verfahren nach einem der vorhergehenden Ansprüche, weiterhin umfassend Reinigen der Späne (108) vor dem elektrischen Isolieren.

7. Verfahren nach einem der vorhergehenden Ansprüche, wobei das elektrische Isolieren Phosphatieren, Lackieren und/oder Oxidieren der Späne (108) umfasst.

8. Verfahren nach einem der vorhergehenden Ansprüche, weiterhin umfassend Glühen der Späne (108) vor dem Anordnen der Späne (108) in der ersten Matrize (118) und / oder der vorbestimmten Form (124).

9. Verfahren nach einem der vorhergehenden Ansprüche, weiterhin umfassend Einbringen mindestens eines Bindemittels zwischen die Späne (108) vor dem Umformen der Späne (108) zu der vorbestimmen Form (124), wobei das mindestens eine Bindemittel insbesondere mindestens einen Klebstoff und/oder Backlack aufweist.

10. Verfahren nach einem der vorhergehenden Ansprüche, weiterhin umfassend Zuführen von Metallpulver zu den Spänen (108).

11. Verfahren nach einem der vorhergehenden Ansprüche, weiterhin umfassend Orientieren der Späne (108) vor dem Umformen der Späne (108) zu der vorbestimmen Form (124) in der ersten Matrize (118), wobei das Orientieren der Späne (108) insbesondere mittels eines Magnetfelds und/oder einer definierten Streutechnik und/oder Vibration erfolgt.

12. Verfahren nach dem vorhergehenden Anspruch, wobei das Orientieren der Späne (108) vor dem Anordnen der Späne (108) in der ersten Matrize (118) oder in der ersten Matrize (118) erfolgt.

13. Verfahren nach einem der vorhergehenden Ansprüche, weiterhin umfassend thermisches Behandeln, insbesondere Ausbacken, der vorbestimmten Form (124) und/oder weiterhin umfassend Kalibrieren der vorbestimmten Form (124), insbesondere mittels eines dritten Umformwerkzeugs (138), das einen dritten Stempel (142) und eine dritte Matrize (140) aufweist, und/oder weiterhin umfassend Vorkompaktieren der Späne (108) vor dem Anordnen der Späne (108) in der ersten Matrize (118).

14. Verfahren nach einem der vorhergehenden Ansprüche, weiterhin umfassend Herstellen mehrerer elektrischer Bauteile (100) und Anordnen der mehreren elektrischen Bauteile (100) zu einem Endbauteil, wobei das Verfahren insbesondere weiterhin Verbinden der mehreren elektrischen Bauteile (100) umfasst.

15. Verfahren nach einem der vorhergehenden Ansprüche, wobei das elektrische Bauteil (100) ein induktives Bauteil ist oder aufweist, insbesondere ein Bauteil mit einer Spule, ein Rotor, ein Stator (104), Segment (102) eines Stators (104) für einen Elektromotor oder ein Bauteil eines Transformators.

16. Elektrisches Bauteil (100) erhalten oder erhältlich durch ein Verfahren nach einem der vorhergehenden Ansprüche, wobei das elektrische Bauteil (100) bevorzugt ein induktives Bauteil ist oder aufweist, insbesondere ein Bauteil mit einer Spule, ein Rotor, ein Stator (104), Segment (102) eines Stators (104) für einen Elektromotor oder ein Bauteil eines Transformators.
